# EUROPÄISCHE PATENTSCHRIFT

(11) **EP 1 216 804 B1**
(45) Veröffentlichungstag und Bekanntmachung des Hinweises auf die Patenterteilung: **22.03.2006**
(21) Anmeldenummer: 01130109.0
(22) Anmeldetag: 18.12.2001
(51) Int. Cl.: B28C 5/42, B28C 7/16

(54) **Fahrzeug, vorzugsweise Fahrmischer, mit einem an den Fahrzeugrahmen angebauten schwenkbaren Förderband**
Vehicle, preferably a transport mixer, with a pivotable conveyor belt connected to the vehicle frame
Véhicule, de préférence un malaxeur mobile, avec une bande transporteuse pivotable montée au chassis

(30) Priorität: 21.12.2000 DE 20021668 U
(43) Veröffentlichungstag der Anmeldung: 26.06.2002
(73) Patentinhaber: Liebherr-Mischtechnik GmbH, 88427 Bad Schussenried (DE)
(72) Erfinder: Kletsch, Reinhold, 88422 Alleshausen (DE)
(74) Vertreter: Gossel, Hans K.

(56) Entgegenhaltungen:
- DE-A- 2 234 627
- US-A- 3 828 949
- US-A- 5 551 776

## Beschreibung

Die Erfindung betrifft ein Fahrzeug, vorzugsweise einen Fahrmischer, mit einem an den Fahrzeugrahmen angebauten schwenkbaren Förderband, dessen Tragteil um eine vertikale Achse drehbar an einem Schwenkarm gelagert ist, der seinerseits um eine vertikale Achse schwenkbar an dem Fahrzeugrahmen oder einer mit diesem verbundenen Konsole gelagert ist, und mit das Tragteil und den Schwenkarm verschwenkenden Antrieben.

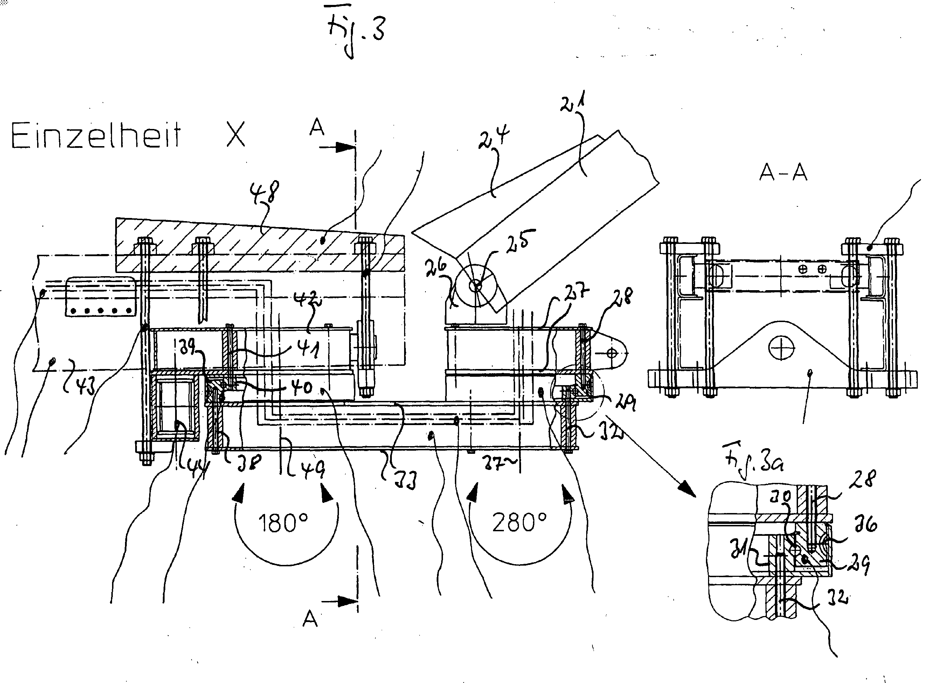

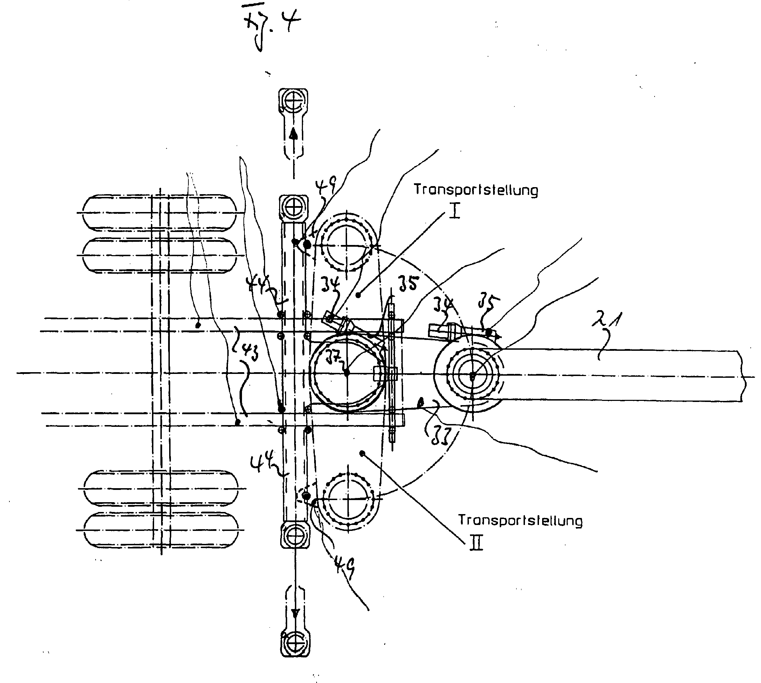

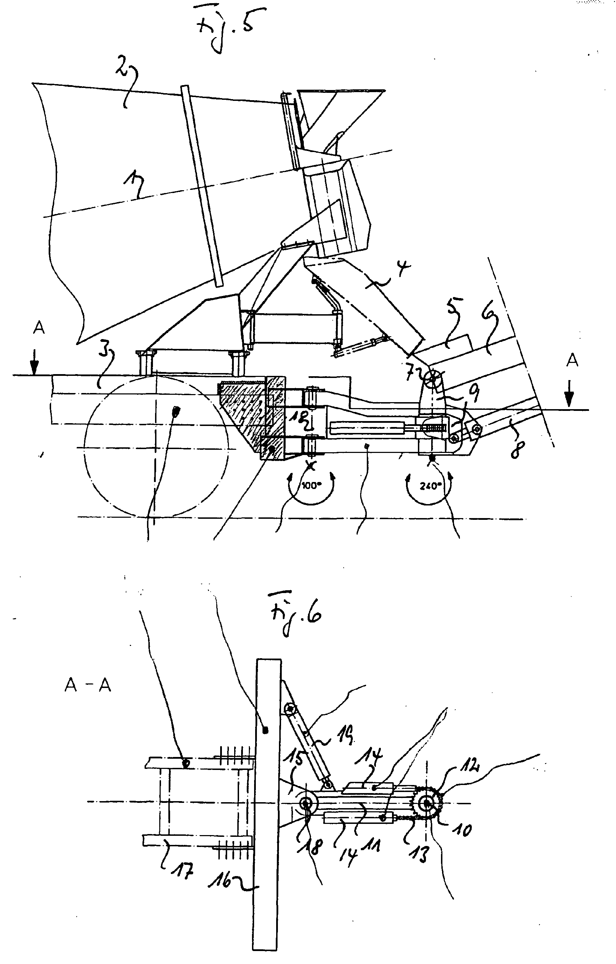

Ein bekannter Fahrmischer dieser Art wird anhand der Fig. 5 und 6 der Zeichnung kurz beschrieben. Aus Fig. 5 ist eine Seitenansicht des hinteren Endbereichs eines Fahrmischers ersichtlich, dessen um die schräg verlaufende Achse 1 drehbare Mischtrommel 2 in üblicher Weise über Tragböcke und Drehlagerungen auf dem Fahrzeugrahmen 3 drehbar gelagert ist. Unter der Auslauföffnung der Drehtrommel 2 ist eine einstellbare Schurre 4 angeordnet, über die das ausgetragene Mischgut in den Aufgabetrichter 5 eines Förderbandes 6 aufgegeben werden kann. Das Förderband 6 und ein dieses um eine horizontale Achse 7 verschwenkender Hydraulikzylinder 8 sind an einem Halteteil 9 gelagert, das um eine vertikale Achse 10 schwenkbar ist, die an dem äußeren Ende eines Schwenkarms 11 gelagert ist. Die Achse 10 trägt ein fest mit dieser verkeiltes Kettenrad 12, über das eine Kette 13 läuft, deren Enden mit den Kolben von Schwenkzylindem 14 verbunden sind, die parallel zueinander an dem Schwenkarm 11 befestigt sind. Der Schwenkarm 11 ist zwischen Lagerschenkeln 15 einer Konsole 16, die mit dem Fahrzeugrahmen 17 verbunden ist, um eine vertikale Achse 18 schwenkbar gelagert. Zur Verschwenkung des Schwenkarms 11 um die vertikale Schwenkachse 18 ist ein Hydraulikzylinder 19 vorgesehen, der schwenkbar mit der Konsole 16 verbunden und dessen Kolben an den Schwenkarm 11 angelenkt ist.

Aufgrund der Schwenkantriebe lassen sich bei dem bekannten Fahrmischer das Tragteil des Förderbands und der Schwenkarm nur um verhältnismäßig kleine Winkel im Bereich von etwa 240° und 100° verschwenken.

Ein gattungsgemäßes Fahrzeug ist bereits aus der DE-A 2 234 627 bekannt.

Aufgabe der Erfindung ist es daher, ein Fahrzeug der eingangs angegebenen Art zu schaffen, bei dem sich sowohl der Schwenkarm als auch das Tragteil des Förderbands um größere Winkel verschwenken lassen, um die Manövrierfähigkeit zu verbessern und den Arbeitsbereich zu vergrößern.

Erfindungsgemäß wird diese Aufgabe durch die Kombination der Merkmale des Anspruchs 1 gelöst. Demnach ist der Schwenkarm und das Tragteil an mit Verzahnungen versehenen Drehkränzen befestigt, deren diese lagernden ringförmigen Lagerkörper an dem Fahrzeugrahmen bzw. der Konsole und dem Schwenkarm befestigt sind. Der Antrieb besteht aus einem angetriebenen Ritzel oder einer angetriebenen Schnecke, die mit den Verzahnungen der Drehkränze kämmen bzw. mit diesen im Eingriff sind. Schließlich ist erfindungsgemäß die vertikale Achse des Schwenkarms in der Symmetrieebene des Fahrzeugs hinter dem Fahrzeug angebracht, so dass der Schwenkarm entlang der beiden Seiten des Fahrzeugs in seine Transportstellungen gebracht werden kann.

Die erfindungsgemäß verwendeten Drehkränze erlauben Endlosdrehungen, so daß sowohl für das Tragteil des Förderbands als auch für den Schwenkarm der vorhandene Schwenkraum, der durch Fahrzeugteile, Aufbauten oder Hindernisse begrenzt ist, voll ausgenutzt werden kann. Weiterhin weisen die Drehkränze einen verhältnismäßig großen Durchmesser auf, so daß sie eine gute Stabilität der Verdreheinrichtungen gewährleisten.

Der Antrieb der Drehkränze kann aus Ritzeln bestehen. Vorzugsweise werden jedoch Schneckentriebe eingesetzt, weil diese selbsthemmend sind.

Die die Schwenkeinrichtungen bildenden Drehkränze bestehen zweckmäßigerweise aus Kugeldrehkränzen.

Ein Ausführungsbeispiel der Erfindung wird nachstehend näher anhand der Zeichnung beschrieben. In dieser zeigt
- Fig. 1: eine Seitenansicht eines Fahrmischers, dessen um vertikale Achsen verschwenkbares Förderband mit der erfindungsgemäßen, aus Drehkränzen bestehenden Schwenkeinrichtung versehen ist,
- Fig. 2: das Heck des Fahrmischers nach Fig. 1 in vergrößerter Darstellung,
- Fig. 3: eine vergrößerte Darstellung der in Fig. 2 eingekreisten Verschwenkeinrichtung,
- Fig. 3a: den in Fig. 3 eingekreisten Teil in vergrößerter Darstellung,
- Fig. 4: eine Draufsicht auf die Schwenkeinrichtung nach den Fig. 1 bis 3 und
- Fig. 5 und 6: die bereits beschriebene Verschwenkeinrichtung für ein Förderband eines bekannten Fahrmischers.

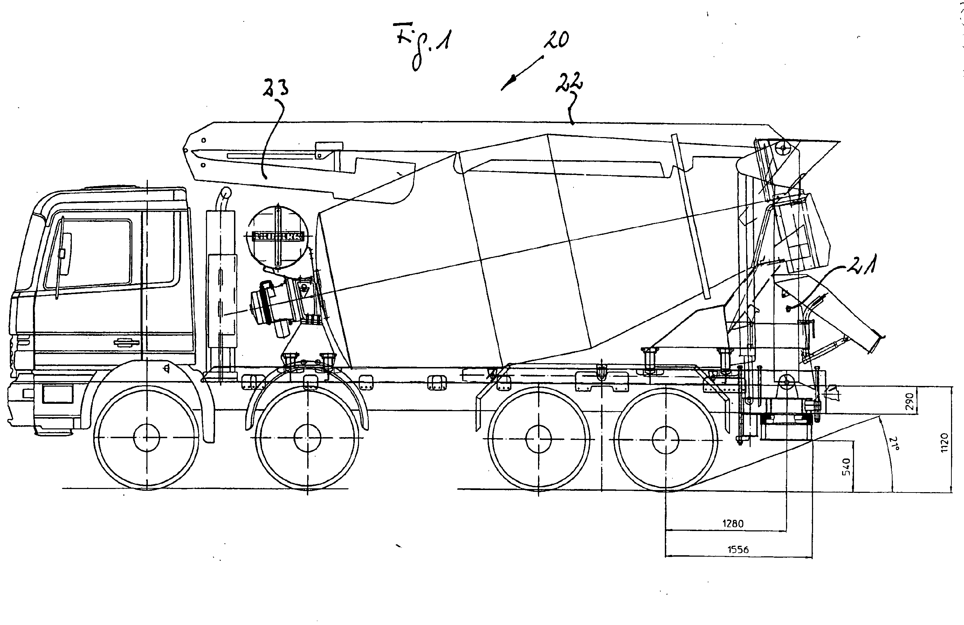

Aus Fig. 1 ist eine Seitenansicht eines Fahrmischers 20 ersichtlich, der mit den erfindungsgemäßen Schwenkeinrichtungen für ein Transportband versehen ist, das in der aus Fig. 1 ersichtlichen Transportstellung an den Fahrmischer 20 angeklappt ist. Das nicht dargestellte Transportband läuft über drei gelenkig miteinander verbundene Rahmenteile 21, 22, 23, die teleskopierbar ausgebildet sein können, um die Förderlängen den örtlichen Gegebenheiten anpassen zu können.

Das innere mit einem Aufgabetrichter 24 versehene Rahmenteil des Förderbands ist um eine horizontale Achse 25 schwenkbar an dem aus einem Lagerbock bestehenden Tragteil 26 gelagert, das seinerseits fest mit einer scheibenförmigen Tragkonstruktion 27 verbunden ist. Die Tragkonstruktion 27 ist durch Spannschrauben 28 mit einem Drehkranz 29 verschraubt, der über in Ringnuten gehalterten Kugeln 30 an einem Innenring 31 drehbar gelagert ist, der über Spannschrauben 32 mit dem äußeren Endbereich eines Schwenkarms 33 verbunden ist. Als Drehantrieb für den Drehkranz 29 ist eine mit einem Antriebsmotor 34 versehene Schnecke 35 vorgesehen, die mit der äußeren Schneckenverzahnung 36 des Drehkranzes 29 in Eingriff ist. Durch den Schneckenantrieb 34 bis 36 läßt sich der Drehkranz 29 mit den beschriebenen Aufbauten um die vertikale Achse 37 verdrehen.

Der Schwenkarm 33 ist durch Spannschrauben 38 mit einem Drehkranz 39 verschraubt, der über in Ringnuten gehalterten Kugeln auf einem Innenring 40 drehbar gelagert ist, der über Spannschrauben 41 mit einer Tragkonstruktion 42 verbunden ist, die ihrerseits mit dem Fahrzeugrahmen 43 und einer mit diesem verschraubten Konsole 44 verbunden ist. Der Drehkranz 39 ist auf seinem äußeren Umfang in gleicher Weise wie der Drehkranz 39 mit einer Schneckenverzahnung versehen, in die eine Schnecke 35 angreift, die von einem Motor 34 antreibbar ist.

Zum Schutz der Verschwenkeinrichtung des Schwenkarms 33 ist eine Abdeckung 48 vorgesehen.

Unter Berücksichtigung der vorhandenen Freiräume läßt sich der Schwenkarm 33 um seine Schwenkachse 49 um etwa 180° und der innere Rahmenteil 21 des Förderbands relativ zu dem Schwenkarm 33 um einen Winkel von etwa 280° verschwenken.

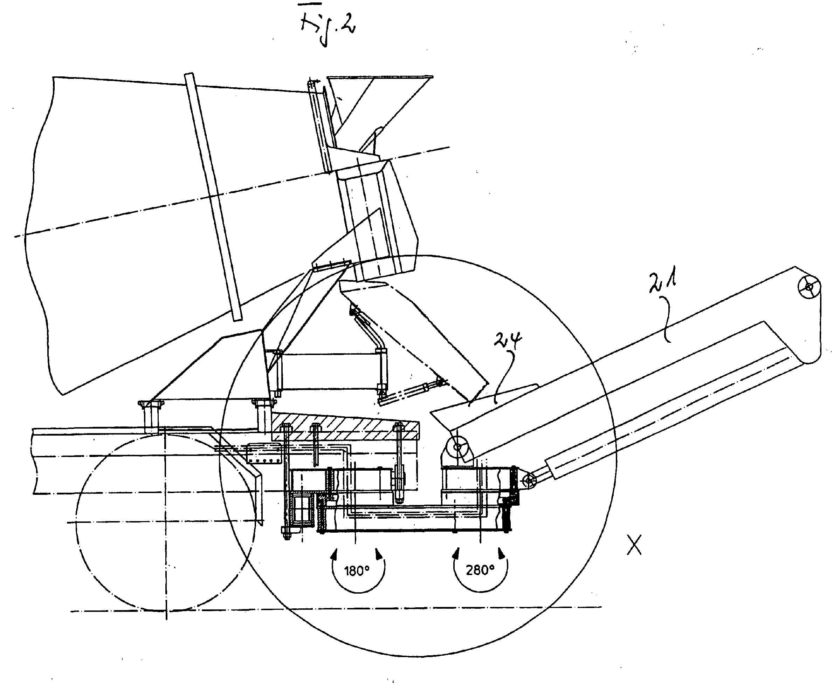

Zur Erreichung der Transportstellung wird der Schwenkarm 33 entweder in die aus Fig. 4 ersichtliche Transportstellung I oder II verschwenkt, in der er etwa parallel zu der Konsole 44 verläuft. In der Transportstellung kann der Schwenkarm 33 durch an diesem befestigte Laschen 49 mit der Konsole 44 verriegelt werden. Weiterhin können Endschalter vorgesehen werden, die den Schwenkarm 33 beim Erreichen der Transportstellung stillsetzen.

## Patentansprüche

1. Fahrzeug, vorzugsweise Fahrmischer (20), mit einem an den Fahrzeugrahmen (43) angebauten schwenkbaren Förderband (21 bis 23), dessen Tragteil (26) um eine vertikale Achse (37) drehbar an einem Schwenkarm (33) gelagert ist, der seinerseits um eine vertikale Achse (49) schwenkbar an dem Fahrzeugrahmen (43) oder einer mit diesem verbundenen Konsole (44) gelagert ist, und mit das Tragteil (26) und den Schwenkarm (33) verschwenkbaren Antrieben,
**dadurch gekennzeichnet,**
**dass** der Schwenkarm (33) und das Tragteil (26) an mit Verzahnungen (36) versehenen Drehkränzen (39, 29) befestigt sind, deren diese lagernden ringförmigen Lagerkörper (40, 31) an dem Fahrzeugrahmen (43) bzw. der Konsole (44) und dem Schwenkarm (33) befestigt sind,
**dass** die Antriebe aus angetriebenen Ritzeln oder angetriebenen Schnecken (35) bestehen, die mit den Verzahnungen (36) der Drehkränze (39, 29) im Eingriff sind und
**dass** die vertikale Achse (49) des Schwenkarms (33) in der Symmetrieebene des Fahrzeugs hinter dem Fahrzeug angebracht ist, so dass der Schwenkarm (33) entlang der beiden Seiten des Fahrzeugs in seine Transportstellung (I, II) gebracht werden kann.

2. Fahrzeug nach Anspruch 1, **dadurch gekennzeichnet, dass** die Drehkränze Kugeldrehkränze (39, 29) sind.

## Claims

1. Vehicle, preferably transport mixer (20), with a pivotable conveyor belt (21 to 23) which is connected to the vehicle frame (43) and the supporting part (26) of which is mounted on a pivoting arm (33) in a manner such that it can rotate about a vertical axis (37), the pivoting arm, for its part, being mounted on the vehicle frame (43), or on a console (44) which is connected thereto, in a manner such that it can pivot about a vertical axis (49), and with drives pivoting the supporting part (26) and the pivoting arm (33), **characterized in that** the pivoting arm (33) and the supporting part (26) are fastened to pivoted bogies (39, 29) which are provided with toothings (36) and the annular bearing bodies (40, 31) of which, which support them, are fastened to the vehicle frame (43), or to the console (44), and to the pivoting arm (33), **in that** the drives comprise driven pinions or driven worms (35) which are in engagement with the toothings (36) of the pivoted bogies (39, 29), and **in that** the vertical axis (49) of the pivoting arm (33) is mounted behind the vehicle in the plane of symmetry of the vehicle, so that the pivoting arm (33) can be brought along both sides of the vehicle into its transport position (I, II).

2. Vehicle according to Claim 1, **characterized in that** the pivoted bogies are ball-mounted pivoted bogies (39, 29).

## Revendications

1. Véhicule, de préférence malaxeur mobile (20), avec une bande transporteuse (21) à (23) basculante montée sur le châssis du véhicule (43), dont la partie portante (26) est logée sur un bras pivotant (33) de façon à pouvoir tourner autour d'un axe (37) vertical, lequel bras est logé pour sa part sur le châssis du véhicule (43) ou une console (44) reliée à celui-ci de façon à pouvoir pivoter autour d'un axe (49) vertical, et avec des entraînements pouvant faire basculer la partie portante (26) et le bras pivotant (33),
**caractérisé en ce que**
le bras pivotant (33) et la partie portante (26) sont fixés des couronnes dentées (39, 29) dotées de dentures (36), dont ces corps de palier (40, 31) de forme annulaire et logeant ces couronnes sont fixés sur le châssis du véhicule (43) ou la console (44) et le bras pivotant (33),
**en ce que** les entraînements se composent de pignons entraînés ou de vis sans fin (35) entraînées, qui sont en prise avec les dentures (36) des couronnes dentées (39, 29) et
**en ce que** l'axe vertical (49) du bras pivotant (33) est placé dans le plan de symétrie du véhicule derrière le véhicule, de sorte que le bras pivotant (33) peut être amené le long des deux côtés du véhicule dans sa position de transport (1, 2).

2. Véhicule selon la revendication 1, **caractérisé en ce que** les couronnes dentées sont des couronnes dentées à billes (39, 29).
